# EUROPEAN PATENT SPECIFICATION

(11) **EP 4 167 111 B1**
(45) Date of publication and mention of the grant of the patent: **01.05.2024**
(21) Application number: 21202101.8
(22) Date of filing: 12.10.2021
(51) Int. Cl.: G06F 21/14

(54) **METHOD AND APPARATUS FOR PREPARING UNIQUE SOFTWARE**
VERFAHREN UND VORRICHTUNG ZUR HERSTELLUNG EINER EINMALIGEN SOFTWARE
PROCÉDÉ ET APPAREIL DE PRÉPARATION DE LOGICIEL UNIQUE

(43) Date of publication of application: 19.04.2023
(73) Proprietor: Planora Oy, 90400 Oulu (FI)
(72) Inventor: Paavola, Mikko, 90400 Oulu (FI)
(74) Representative: Kolster Oy Ab

(56) References cited:
- WO-A1-2008/034900
- WO-A1-2011/120122
- US-A1- 2006 101 047

## Description

### FIELD OF THE INVENTION

The present invention relates to a method and apparatus for producing unique binary executable software and the use of the software.

### BACKGROUND OF THE INVENTION

In modern communication and computer networks, reliability and security of software are vital elements. Software is used to monitor and control many vital functions of infrastructure, such as heating, energy, and water supply, for example. It is of upmost importance that the software is not tampered or hacked in any manner as that would cause many serious side effects.

Document WO2008/034900-A1 discloses a method for protecting a computer program against manipulation and for shielding its communication with other programs against eavesdropping and modification is presented. The method comprises the creation of individualized program copies to different groups of users, the insertion of or the derivation of individual cryptographic keys from the program code, the obfuscation of the program code, and the self-authentication of the program towards other programs.

Document WO2011/120122-A1 discloses a linker or loader whereby the application of security transformations to object-code modules can be deferred until link or load-time, through, for example, memory relocation, selection from diverse instances of a module, and late-binding of constants.

Document US2006/0101047-A1 discloses a method of developing fortified software using external guards, identifying information, security policies and obfuscation.

External guards protect protected programs within the fortified software that they are not part of. The external guards can read and check the protected programs directly to detect tampering or can exchange information with the protected programs through arguments of call statements or bulletin boards.

### BRIEF DESCRIPTION OF THE INVENTION

According to an aspect of the present invention, there is provided an apparatus of claim 1.

According to an aspect of the present invention, there are provided a method of claim 7.

According to an aspect of the present invention, there is provided a computer program of claim 13.

One or more examples of implementations are set forth in more detail in the accompanying drawings and the description below. Other features will be apparent from the description and drawings, and from the claims. The embodiments and or examples and features, if any, described in this specification that do not fall under the scope of the independent claims are to be interpreted as examples useful for understanding various embodiments of the invention.

### BRIEF DESCRIPTION OF THE DRAWINGS

In the following the invention will be described in greater detail by means of preferred embodiments with reference to the attached drawings, in which
Figure 1 illustrates an example of a schematic structure of an executable program;
Figure 2 illustrates an example of software development;
Figure 3 illustrates an example of environment where some embodiments of the invention may be applied;
Figures 4A, 4B, 4C and 4D are flowcharts illustrating some embodiments;
Figures 5A and 5B illustrate a very simplified example of processing source files;
Figure 6 illustrates an example of an apparatus applying some embodiments of the invention.

### DETAILED DESCRIPTION OF THE INVENTION

Secure and reliable usage of software has always been an important issue in all forms of software development and software usage. It is important that software is protected from malicious and illegal usage, that software is not tampered or hacked in any manner as that would lead to breach in security and possible cause loss of data, and many other serious problems. Hacking and copying of software is especially dangerous in areas which relate to controlling vital areas of society, such as water, electricity, heat and other infrastructure purposes.

Hacking software has always been present as long as software has been in used and it has increased since the wide use of Internet. Hackers try to make illegal copies of valid software and possibly alter the software for their own purposes.

Many procedures have been proposed and used to prevent hacking and illegal to software. These procedures include applying firewalls, use of antivirus software, anti-spyware software, enhanced use of passwords etc. However, these procedures do not provide much protection to software copying. Thus, more efficient procedures are needed.

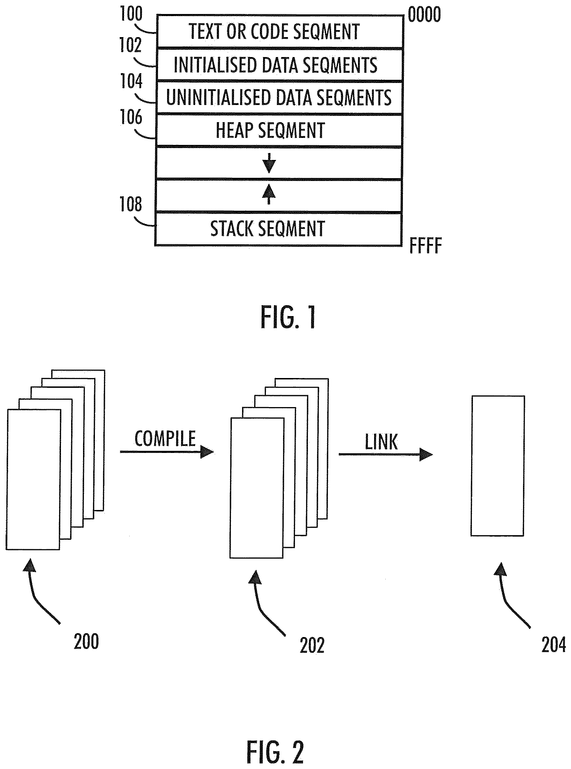

Figure 1 illustrates an example of a schematic structure of an executable program. When a software program is to be executed or run, it is loaded into the memory of a computing device. In this example, the software is loaded into memory area 0000 - FFFF. The software loaded in the memory typically comprises a text or code segment 100, a segment 102 for initialised data, a segment 104 for uninitialised data, a heap segment 106 and a stack segment 108. The code and data segments have typically a predetermined size. Code segment 100 comprises the code to be executed. Data having a given predefined values is located in segment 102 and segment 104 is for data having no pre-defined values. The size of heap and stack segments increase during the execution of the software.

In an embodiment, the content of the code segment 100 and the segment 102 for initialised data is of interest.

Fig. 2 illustrates an example of software development. The stating point is one or more source files 200 which comprise the program code written in some programming language, such as C, C++, Pascal, to name a few. These source code files are compiled into corresponding object files 202 by a compiler, which is typically a specific computer program translating the source code files into a lower-level language, such as object code or assembly language. Typically, the present-day compilers perform some optimization to the code in the source code files. The object files are then linked by a linker into an executable file 204 which may be loaded into a memory of a computer for execution.

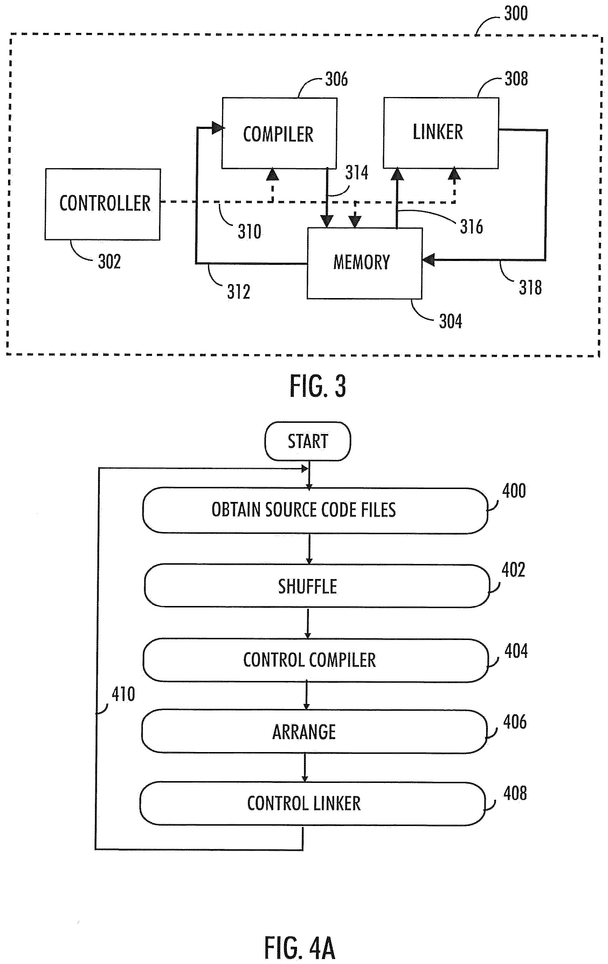

Fig. 3 illustrates an example environment 300 where some embodiments of the invention may be applied. The environment comprises a controller apparatus 302, which control 310 the operation of the process. The environment comprises a memory 304, which may store data, such as source code files, object files and executable files. The environment comprises a compiler 306 and a linker 308. Both the compiler and the linker may communicate 312, 314, 316, 318 with the memory 304 and are controlled by the controller apparatus 302.

Fig. 4A is a flowchart illustrating an embodiment. The flowchart illustrates the operation of the controller apparatus 302.

In step 400, the controller apparatus 302 is configured to obtain a set of source code files to be prepared into an executable file, the source code files comprising a multitude of function code segments and data segments definitions.

In an embodiment, the apparatus reads the set of source code files from the memory 304.

In step 402, the controller apparatus 302 is configured to shuffle the function code segments and data segments definitions inside a source code file or between the set of source code files in a random manner while retaining the functionality of the source code fields.

In an embodiment, the apparatus finds from the one or more source code files function definitions and moves them about inside the source code files.

In an embodiment, the apparatus shuffles one or more function code segments from one source code file to another source code file in a random manner.

In an embodiment, the apparatus stores the processed source code files into the memory 304.

In step 404, the controller apparatus 302 is configured to control a compiler 306 to produce object files from the source code files.

In an embodiment, the apparatus controls the compiler 306 to read 312 the processed source code files from the memory 304, compile the source code files into object files and store 314 the object files into the memory 304.

In step 406, the controller apparatus 302 is configured to arrange the object files into a random order for a linker 308.

In an embodiment, the apparatus controls the linker 308 to read 316 the processed source code files from the memory 304 in a given order.

In step 408, the controller apparatus 302 is configured to control the linker 308 to link the produced object files into a binary executable file.

In an embodiment, the apparatus controls the linker 308 to store 318 the binary executable file to the memory 304.

In step 410, the controller apparatus 302 is configured to repeat the above steps a given number of times and obtaining a given number of unique binary executable files each having a unique sequence of bits and the same functionality.

In an embodiment, the random order may be achieved by utilising a random number or pseudo random number generator known in the art. A random seed, such a current time, may be given as an input to a pseudo random number generator which then may be utilised in rearranging items in random places or random order. The use of a pseudo random number generator is as such known in the art.

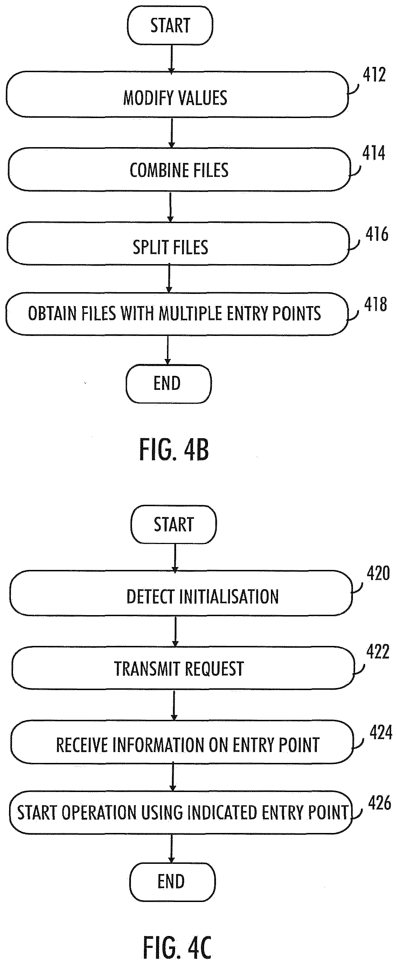

Fig. 4B is a flowchart illustrating an embodiment. The flowchart illustrates the operation of the controller apparatus 302. In an embodiment, these actions may be performed in connection with steps 400, 402 of Fig. 4A.

In step 412, the controller apparatus 302 is configured to modify values of one or more constants defined in the one or more source code files. These constants may be such that the values of them at compiling time have no effect on the executable software.

In step 414, the controller apparatus 302 is configured to combine one or more source code files together.

In step 416, the controller apparatus 302 is configured to divide a source code file to more than one source code files.

In step 418, the controller apparatus 302 is configured to obtain one or more source files comprising more than one entry points or main functions and initialisation code instructing the executable file to, when executed, connect to the Internet, and receive instructions which entry point or main function to use when the executable file is run.

The result of the above-described operations is that each executable file produced by the disclosed solution is different and unique. Each executable file works in a similar manner, i.e. the operation of the software is the same but each produced file has a different content on the bit level. For example, moving a piece of code comprising function definition from a place in the source code to another place does not have an effect on the operation of the function, but the resulted object file, and the linked executable as well, will be different.

The location of functions in the source file can be moved without altering the operation of the functions. Each time, before compiling the source files, the above processing of the source files, where pieces of code (functions, data definitions) are randomly moved to another location, is executed. When the source files are compiled, the content of the resulting object files are each time different, although the code works in the same manner. The linked executable files will also be different.

Furthermore, when the order of object files, which act as the input to the linker, is changed, the resulting executable file at the output of the linker will be different each time, partly due to the different source files and partly due to the different order of the object files.

The proposed solution provides a high resistance against hacking. As each legal copy of the software is unique, a party utilising an illegal copy of the software may be detected as the copy may be identified.

Further, a hacker trying to reverse engineer the software has great difficulties determining the operation of the software. In an embodiment, the software comprises multiple main programs and a hacker utilising a debugger cannot determine how the software works as it is not possible to determine the main program to be used.

In an embodiment, when the main program is selected at runtime on the basis of outside input, the hacker must start the program and allow it access the Internet. This is dangerous to the hacker as the illegal use of software is detected and possibly prevented.

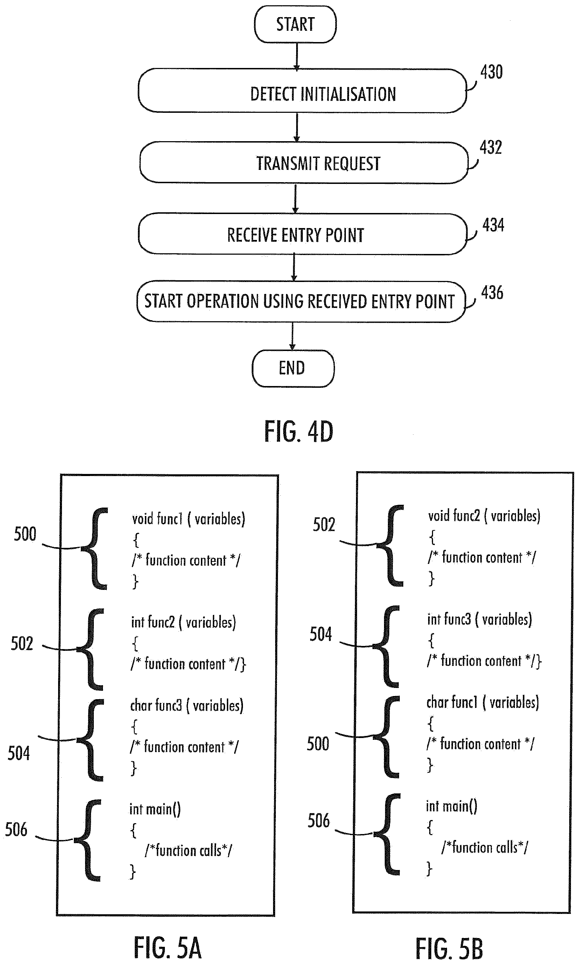

Figs. 5A and 5B illustrate a very simplified example. In Fig. 5A is source code comprising three functions 500, 502, 504 and an entry point or a main function 506, which calls these functions. Fig. 5B illustrates a processed source file where the locations of the functions 500, 502, 504 is changed. These changes have no effect on the operation of the final executable file. However, the executable file made from the code in Fig. 5A is on the bit level different than the executable file made from the code in Fig. 5B.

In practical realisations, the number of functions in source files is much greater. Commercial software, for example software configured to control manufacturing processes or other industrial applications may easily comprise hundreds if not thousands of functions in tens or hundreds of different source files. Thus, the possibilities of putting the functions in different order is large.

Likewise, the number of variables in source files in practical realisations is large. These variables may be for example function pointers. They may be in different order in the source code with no effect on the operation.

In an embodiment, dynamical linking may be applied. Dynamical linking denotes runtime definition of a called function. Usually, dynamical linking is applied to library functions but here it is applied to entry point or main function.

An entry point denotes the section of the code where the code has access to command line arguments and the initial instructions are executed. When a program is executed by an operating system, the loader program of the operating system calls the entry point or main function of the program.

When the linker links the object files to an executable file, it may be configured to prepare an mapfile, which comprises list of public symbols, and address (as offset from the beginning of the program) of each public symbol, which may either in the code segment or the data segment. The public symbols include the functions.

In an embodiment, the source files may comprise code for more than one entry point or main program. Each main program may have different function calls, or the same function calls as other main programs.

In an embodiment, the controlling apparatus may be configured, when controlling the compiling and linking of software, to obtain one or more source files comprising more than one entry points or main functions and initialisation code instructing the executable file to, when executed, connect to the Internet, and receive instructions which entry point or main function to use when the executable file is run.

The instructions may compromise the location of the desired entry point or main program based on the map file produced by the linker.

As each copy of the software is unique, due shuffling of code and data definitions in source files of the software. Thus, in each copy of the software, entry points or main functions are in different locations of the binary executable file. A hacker has big difficulties in examining the software. If the hacker has somehow obtained multiple copies of software, they are all different and finding the location of one entry point or main function in one copy of software does not provide any help regarding other copies of the software.

Fig. 4C is a flowchart illustrating an embodiment. The flowchart illustrates the operation of the software when it is executed.

In step 420, the software is configured to detect initialisation of the software. This may happen when a legitimate user of a hacker tries to run the software.

In step 422, the software is configured to first try to connect to Internet and a specific server of one of a set of specific servers and download data, before initialising the actual operation of the software. The software may identify itself, so that the server receiving the connection attempt may determine which unique copy of the software sent the connection attempt.

Based on the identification, the server may transmit instructions to the software which entry point or main function to use in the actual operation of the software.

In step 424, the software is configured to receive the instructions.

In step 426, the software is configured to start the main program indicated in the instructions.

For a legitimate user, this process may be transparent and offer no surprises. However, for a hacker the above process is dangerous as it reveals the usage of the unique copy of the software.

In an embodiment, the controlling apparatus may be configured, when controlling the compiling and linking of software, to obtain one or more source files comprising initialisation code instructing the executable file to, when executed, connect to the Internet, and receive executable code comprising an entry point or main function to use when the executable file is run.

The entry point or main function may be received as data and located in the data segment. The received data in the data segment may be read and interpreted as code and executed as a main program.

Fig. 4D is a flowchart illustrating an embodiment. The flowchart illustrates the operation of the software when it is executed.

In step 430, the software is configured to detect initialisation of the software. This may happen when a legitimate user of a hacker tries to run the software.

In step 432, the software is configured to first try to connect to Internet and a specific server of one of a set of specific servers and download data, before initialising the actual operation of the software. The software may identify itself, so that the server receiving the connection attempt may determine which unique copy of the software sent the connection attempt.

Based on the identification, the server may transmit instructions to the software, the instructions comprising executable code comprising an entry point or main function to use when the software is run.

In step 434, the software is configured to receive the instructions comparing the entry point or main program code.

In step 436, the software is configured to start the main program received in the instructions.

Again, for a legitimate user, this process may be transparent and offer no surprises. For a hacker the above process is dangerous as it reveals the usage of the unique copy of the software. Further, a hacker may have no knowledge of what the software is actually doing as the executed main program is not included in the executable file until it is received from the server.

In an embodiment, the manufacturer of the software or other party may maintain a server, or a set of servers, configured to respond to connections attempts sent by the software. The server may store instructions regarding the entry points or main programs of the unique copies of the software.

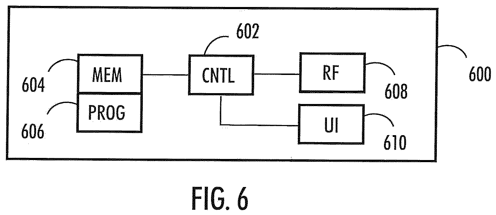

Fig. 6 illustrates an example embodiment. The figure illustrates a simplified example of an apparatus 600 applying embodiments of the invention. It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus the example includes a control circuitry 602 configured to control at least part of the operation of the apparatus.

The apparatus may comprise a memory 604 for storing data, being operationally connected to the control circuitry 602. Furthermore, the memory may store software 606 executable by the control circuitry 602. In an embodiment, the memory may be integrated in the control circuitry. The apparatus may further comprise one or more interface circuitries 608, 610.

The software 606 may comprise a computer program comprising program code means adapted to cause the control circuitry 602 of the apparatus to perform the embodiments described above, for example the embodiment described in connection with Figs. 4A, 4B, 4C and 4D and in the claims.

In an embodiment, one of the interfaces may be a transmitter or a transceiver or a network interface 608 configured to communicate with other apparatuses or devices or servers via Internet, for example. The apparatus may also comprise a user interface 610. The user interface may comprise a display, keyboard, microphone, speaker, for example. The interfaces may be operationally connected to the control circuitry 602.

In an embodiment, the environment 300 of Fig.3 may be realised with one or more apparatuses of Fig. 6. The controller apparatus 302 may be realised as a computer program running in an apparatus and the memory 304, compiler 306, linker 308 may be located in one or more other apparatuses. The controller apparatus 302, the memory 304, compiler 306 and linker 308 may also be located in a single apparatus.

An embodiment provides a computer program embodied on a distribution medium, comprising program instructions which, when loaded into an electronic apparatus, are configured to control the apparatus to execute at least the following: obtaining a set of source code files to be prepared into an executable file, the source code files comprising one or more function code segments and data segments definitions; relocating one or more function code segments and data segments inside or between one or more source code files in a random manner; controlling a compiler to produce object files from the source code files; rearranging the object files into a random order for a linker; controlling the linker to link the produced object files into an executable file.

An embodiment provides an apparatus comprising means for obtaining a set of source code files to be prepared into a binary executable file, the source code files comprising a multitude of function code definitions and data definitions; means for shuffling the function code definitions and data definitions inside a source code file or between the set of source code files in a random manner while retaining the functionality of the source code fields; means for controlling a compiler to produce object files from the source code files; means for arranging the object files into a random order for a linker; means for controlling the linker to link the produced object files into a binary executable file; and means for repeating the above steps a given number of times and producing the given number of unique binary executable files each having a unique sequence of bits and the same functionality.

It will be obvious to a person skilled in the art that, as the technology advances, the inventive concept can be implemented in various ways. The invention and its embodiments are not limited to the examples described above but may vary within the scope of the claims.

## Claims

1. An apparatus for producing unique binary executable software, the apparatus comprising at least one processor; and at least one memory including computer program code, the at least one memory and computer program code configured to, with the at least one processor, cause the apparatus to:
obtain (400) a set of source code files to be prepared into a binary executable file, the source code files comprising a multitude of function code definitions and data definitions;
shuffle (402) the function code definitions and data definitions inside a source code file or between the set of source code files in a random manner retaining the functionality of the source code fields;
control (404) a compiler to produce object files from the source code files;
arrange (406) the object files into a random order for a linker;
control (408) the linker to link the produced object files into a binary executable file;
repeat (410) the above steps a given number of times and producing a given number of unique binary executable files each having a unique sequence of bits and the same functionality.

2. The apparatus of claim 1 the at least one memory and the computer program code configured to, with the at least one processor, cause the apparatus further to:
modify values of one or more constants defined in the one or more source code files.

3. The apparatus of claim 1 or 2, the at least one memory and the computer program code configured to, with the at least one processor, cause the apparatus further to:
shuffle one or more function code segments from one source code file to another source code file in a random manner.

4. The apparatus of any preceding claim, the at least one memory and the computer program code configured to, with the at least one processor, cause the apparatus further to:
combine one or more source code files together and/or
divide a source code file into more than one source code files.

5. The apparatus of any preceding claim, wherein
one or more source files of the set of source code files comprise more than one entry points or main functions and initialisation code instructing the resulted binary executable file to, when executed, connect to the Internet, and receive instructions which entry point or main function to use when the binary executable file is run.

6. The apparatus of any preceding claim, wherein
one or more source files of the set of source code files comprise initialisation code instructing the resulted binary executable file to, when executed, connect to the Internet, and receive executable code comprising an entry point or main function to use when the binary executable file is run.

7. A method for producing unique binary executable software, comprising
obtaining (400) a set of source code files to be prepared into a binary executable file, the source code files comprising a multitude of function code definitions and data definitions;
shuffling (402) the function code definitions and data definitions inside a source code file or between the set of source code files in a random manner while retaining the functionality of the source code fields;
controlling (404) a compiler to produce object files from the source code files;
arranging (406) the object files into a random order for a linker;
controlling (408) the linker to link the produced object files into a binary executable file; and
repeating (410) the above steps a given number of times and producing the given number of unique binary executable files each having a unique sequence of bits and the same functionality.

8. The method of claim 7, further comprising:
modifying values of one or more constants defined in the source code files.

9. The method of claim 7 or 8, further comprising:
combining one or more source code files together.

10. The method of any preceding claim 7 to 9, further comprising:
dividing a source code file into more than one source code files.

11. The method of any preceding claim 7 to 10, wherein
one or more source files of the set of source code files comprising more than one entry points or main functions and initialisation code instructing the resulted binary executable file to, when executed, connect to the Internet, and receive instructions which entry point or main function to use when the binary executable file is run.

12. The method of any preceding claim 7 to 11, wherein
one or more source files of the set of source code files comprising initialisation code instructing the resulted binary executable file to, when executed, connect to the Internet, and receive executable code comprising an entry point or main function to use when the binary executable file is run.

13. A computer program comprising instructions for causing an apparatus to perform at least the following:
obtaining (400) a set of source code files to be prepared into a binary executable file, the source code files comprising a multitude of function code definitions and data definitions;
shuffling (402) the function code definitions and data definitions inside a source code file or between the set of source code files in a random manner retaining the functionality of the source code fields;
controlling (404) a compiler to produce object files from the source code files;
arranging (406) the object files into a random order for a linker;
controlling (408) the linker to link the produced object files into a binary executable file;
repeating (410) the above steps a given number of times and producing a given number of unique binary executable files each having a unique sequence of bits and the same functionality.

## Patentansprüche

1. Vorrichtung zum Erstellen einer einmaligen binären ausführbaren Software, wobei die Vorrichtung mindestens einen Prozessor; und mindestens einen Speicher umfasst, der Computerprogrammcode beinhaltet, wobei der mindestens eine Speicher und der Computerprogrammcode dazu ausgelegt sind, die Vorrichtung mit dem mindestens einen Prozessor zu Folgendem zu veranlassen:
Erhalten (400) eines Satzes von Quellcodedateien, die zu einer binären ausführbaren Datei zusammenzustellen sind, wobei die Quellcodedateien mehrere Funktionscodedefinitionen und Datendefinitionen umfassen;
Mischen (402) der Funktionscodedefinitionen und der Datendefinitionen in einer Quellcodedatei oder zwischen dem Satz von Quellcodedateien in einer Zufallsweise unter Beibehaltung der Funktionalität der Quellcodefelder;
Steuern (404) eines Kompilierers, um aus den Quellcodedateien Objektdateien zu erstellen;
Anordnen (406) der Objektdateien in einer Zufallsreihenfolge für einen Verknüpfer;
Steuern (408) des Verknüpfers, um die erstellten Objektdateien zu einer binären ausführbaren Datei zu verknüpfen;
Wiederholen (410) der obigen Schritte mit einer gegebenen Häufigkeit und Erstellen einer gegebenen Anzahl von einmaligen binären ausführbaren Dateien, von denen jede eine einmalige Sequenz von Bits und dieselbe Funktionalität aufweist.

2. Vorrichtung nach Anspruch 1, wobei der mindestens eine Speicher und der Computerprogrammcode dazu ausgelegt sind, die Vorrichtung mit dem mindestens einen Prozessor ferner zu Folgendem zu veranlassen:
Modifizieren von Werten von einer oder mehreren Konstanten, die in der einen oder den mehreren Quellcodedateien definiert sind.

3. Vorrichtung nach Anspruch 1 oder 2, wobei der mindestens eine Speicher und der Computerprogrammcode dazu ausgelegt sind, die Vorrichtung mit dem mindestens einen Prozessor ferner zu Folgendem zu veranlassen:
Mischen von einem oder mehreren Funktionscodesegmenten aus einer Quellcodedatei in einer Zufallsweise in eine andere Quellcodedatei.

4. Vorrichtung nach einem der vorhergehenden Ansprüche, wobei der mindestens eine Speicher und der Computerprogrammcode dazu ausgelegt sind, die Vorrichtung mit dem mindestens einen Prozessor ferner zu Folgendem zu veranlassen:
Zusammenkombinieren von einer oder mehreren Quellcodedateien und/oder
Teilen einer Quellcodedatei in mehr als eine Quellcodedatei.

5. Vorrichtung nach einem der vorhergehenden Ansprüche, wobei
eine oder mehrere Quelldateien des Satzes von Quellcodedateien mehr als einen Eintrittspunkt oder Hauptfunktionen und Initialisierungscode umfassen, der die resultierende binäre ausführbare Datei, wenn sie ausgeführt wird, zum Verbinden mit dem Internet und Empfangen von Anweisungen anweist, welcher Eintrittspunkt oder welche Hauptfunktion zu verwenden ist, wenn die binäre ausführbare Datei läuft.

6. Vorrichtung nach einem der vorhergehenden Ansprüche, wobei
eine oder mehrere Quelldateien des Satzes von Quellcodedateien Initialisierungscode umfassen, der die resultierende binäre ausführbare Datei, wenn sie ausgeführt wird, zum Verbinden mit dem Internet und Empfangen von ausführbarem Code anweist, der einen Eintrittspunkt oder eine Hauptfunktion umfasst, der bzw. die zu verwenden ist, wenn die binäre ausführbare Datei läuft.

7. Verfahren zum Erstellen einer einmaligen binären ausführbarem Software, das Folgendes umfasst
Erhalten (400) eines Satzes von Quellcodedateien, die zu einer binären ausführbaren Datei zusammenzustellen sind, wobei die Quellcodedateien mehrere Funktionscodedefinitionen und Datendefinitionen umfassen;
Mischen (402) der Funktionscodedefinitionen und der Datendefinitionen in einer Quellcodedatei oder zwischen dem Satz von Quellcodedateien in einer Zufallsweise, während die Funktionalität der Quellcodefelder beibehalten wird;
Steuern (404) eines Kompilierers, um aus den Quellcodedateien Objektdateien zu erstellen;
Anordnen (406) der Objektdateien in einer Zufallsreihenfolge für einen Verknüpfer;
Steuern (408) des Verknüpfers, um die erstellten Objektdateien zu einer binären ausführbaren Datei zu verknüpfen; und
Wiederholen (410) der obigen Schritte mit einer gegebenen Häufigkeit und Erstellen der gegebenen Anzahl von einmaligen binären ausführbaren Dateien, von denen jede eine einmalige Sequenz von Bits und dieselbe Funktionalität aufweist.

8. Verfahren nach Anspruch 7, das ferner Folgendes umfasst:
Modifizieren von Werten von einer oder mehreren Konstanten, die in den Quellcodedateien definiert sind.

9. Verfahren nach Anspruch 7 oder 8, das ferner Folgendes umfasst:
Zusammenkombinieren von einer oder mehreren Quellcodedateien.

10. Verfahren nach einem der vorhergehenden Ansprüche 7 bis 9, das ferner Folgendes umfasst:
Teilen einer Quellcodedatei in mehr als eine Quellcodedatei.

11. Verfahren nach einem der vorhergehenden Ansprüche 7 bis 10, wobei
eine oder mehrere Quelldateien des Satzes von Quellcodedateien mehr als einen Eintrittspunkt oder Hauptfunktionen und Initialisierungscode umfassen, der die resultierende binäre ausführbare Datei, wenn sie ausgeführt wird, zum Verbinden mit dem Internet und Empfangen von Anweisungen anweist, welcher Eintrittspunkt oder welche Hauptfunktion zu verwenden ist, wenn die binäre ausführbare Datei läuft.

12. Verfahren nach einem der vorhergehenden Ansprüche 7 bis 11, wobei
eine oder mehrere Quelldateien des Satzes von Quellcodedateien Initialisierungscode umfassen, der die resultierende binäre ausführbare Datei, wenn sie ausgeführt wird, zum Verbinden mit dem Internet und Empfangen von ausführbarem Code anweist, der einen Eintrittspunkt oder eine Hauptfunktion umfasst, der bzw. die zu verwenden ist, wenn die binäre ausführbare Datei läuft.

13. Computerprogramm, das Anweisungen zum Veranlassen einer Vorrichtung, mindestens Folgendes durchzuführen, umfasst:
Erhalten (400) eines Satzes von Quellcodedateien, die zu einer binären ausführbaren Datei zusammenzustellen sind, wobei die Quellcodedateien mehrere Funktionscodedefinitionen und Datendefinitionen umfassen;
Mischen (402) der Funktionscodedefinitionen und der Datendefinitionen in einer Quellcodedatei oder zwischen dem Satz von Quellcodedateien in einer Zufallsweise, während die Funktionalität der Quellcodefelder beibehalten wird;
Steuern (404) eines Kompilierers, um aus den Quellcodedateien Objektdateien zu erstellen;
Anordnen (406) der Objektdateien in einer Zufallsreihenfolge für einen Verknüpfer;
Steuern (408) des Verknüpfers, um die erstellten Objektdateien zu einer binären ausführbaren Datei zu verknüpfen;
Wiederholen (410) der obigen Schritte mit einer gegebenen Häufigkeit und Erstellen einer gegebenen Anzahl von einmaligen binären ausführbaren Dateien, von denen jede eine einmalige Sequenz von Bits und dieselbe Funktionalität aufweist.

## Revendications

1. Appareil pour produire un logiciel exécutable binaire unique, l'appareil comprenant au moins un processeur ; et au moins une mémoire comportant un code de programme informatique, la au moins une mémoire et le code de programme informatique étant configurés pour, avec le au moins un processeur, amener l'appareil à :
obtenir (400) un jeu de fichiers de code source à préparer dans un fichier exécutable binaire, les fichiers de code source comprenant une multitude de définitions de code de fonction et de définitions de données ;
mélanger (402) les définitions de code de fonction et les définitions de données au sein d'un fichier de code source ou parmi le jeu de fichiers de code source de manière aléatoire en conservant la fonctionnalité des champs de code source ;
contrôler (404) un compilateur pour produire des fichiers objets à partir des fichiers de code source ;
agencer (406) les fichiers objets dans un ordre aléatoire pour un éditeur de liens ;
contrôler (408) l'éditeur de liens pour lier les fichiers objets produits en un fichier exécutable binaire ;
répéter (410) les étapes ci-dessus un nombre donné de fois et produire un nombre donné de fichiers exécutables binaires uniques ayant chacun une séquence unique de bits et la même fonctionnalité.

2. Appareil selon la revendication 1, dans lequel la au moins une mémoire et le code de programme informatique sont configurés pour, avec le au moins un processeur, amener en outre l'appareil à :
modifier les valeurs d'une ou plusieurs constantes définies dans les un ou plusieurs fichiers de code source.

3. Appareil selon la revendication 1 ou 2, dans lequel la au moins une mémoire et le code de programme informatique sont configurés pour, avec le au moins un processeur, amener en outre l'appareil à :
mélanger un ou plusieurs segments de code de fonction d'un fichier de code source à un autre fichier de code source de manière aléatoire.

4. Appareil selon l'une des revendications précédentes, dans lequel la au moins une mémoire et le code de programme informatique sont configurés pour, avec le au moins un processeur, amener en outre l'appareil à :
combiner un ou plusieurs fichiers de code source ensemble et/ou
diviser un fichier de code source en plusieurs fichiers de code source.

5. Appareil selon l'une des revendications précédentes, dans lequel
un ou plusieurs fichiers source du jeu de fichiers de code source comprennent plusieurs points d'entrée ou fonctions principales et un code d'initialisation ordonnant au fichier exécutable binaire résultant, lorsqu'il est exécuté, de se connecter à l'Internet et de recevoir des instructions sur le point d'entrée ou la fonction principale à utiliser lors de l'exécution du fichier exécutable binaire.

6. Appareil selon l'une des revendications précédentes, dans lequel
un ou plusieurs fichiers source du jeu de fichiers de code source comprennent un code d'initialisation ordonnant au fichier exécutable binaire résultant, lorsqu'il est exécuté, de se connecter à l'Internet, et de recevoir un code exécutable comprenant un point d'entrée ou une fonction principale à utiliser lors de l'exécution du fichier exécutable binaire.

7. Procédé pour produire un logiciel exécutable binaire unique, comprenant
l'obtention (400) d'un jeu de fichiers de code source à préparer dans un fichier exécutable binaire, les fichiers de code source comprenant une multitude de définitions de code de fonction et de définitions de données ;
le mélange (402) des définitions de code de fonction et des définitions de données au sein d'un fichier de code source ou parmi le jeu de fichiers de code source de manière aléatoire tout en conservant la fonctionnalité des champs de code source ;
le contrôle (404) d'un compilateur pour produire des fichiers objets à partir des fichiers de code source ;
l'agencement (406) des fichiers objets dans un ordre aléatoire pour un éditeur de liens ;
le contrôle (408) de l'éditeur de liens pour lier les fichiers objets produits en un fichier exécutable binaire ; et
la répétition (410) des étapes ci-dessus un nombre donné de fois et la production du nombre donné de fichiers exécutables binaires uniques ayant chacun une séquence unique de bits et la même fonctionnalité.

8. Procédé selon la revendication 7, comprenant en outre :
la modification de valeurs d'une ou plusieurs constantes définies dans les fichiers de code source.

9. Procédé selon la revendication 7 ou 8, comprenant en outre :
la combinaison d'un ou plusieurs fichiers de code source ensemble.

10. Procédé selon l'une des revendications précédentes 7 à 9, comprenant en outre :
la division d'un fichier de code source en plusieurs fichiers de code source.

11. Procédé selon l'une des revendications précédentes 7 à 10, dans lequel
un ou plusieurs fichiers source du jeu de fichiers de code source comprennent plusieurs points d'entrée ou fonctions principales et un code d'initialisation ordonnant au fichier exécutable binaire résultant, lorsqu'il est exécuté, de se connecter à l'Internet et de recevoir des instructions sur le point d'entrée ou la fonction principale à utiliser lors de l'exécution du fichier exécutable binaire.

12. Procédé selon l'une des revendications précédentes 7 à 11, dans lequel
un ou plusieurs fichiers source du jeu de fichiers de code source comprennent un code d'initialisation ordonnant au fichier exécutable binaire résultant, lorsqu'il est exécuté, de se connecter à l'Internet, et de recevoir un code exécutable comprenant un point d'entrée ou une fonction principale à utiliser lors de l'exécution du fichier exécutable binaire.

13. Programme informatique comprenant des instructions pour amener un appareil à effectuer au moins ce qui suit :
obtenir (400) un jeu de fichiers de code source à préparer dans un fichier exécutable binaire, les fichiers de code source comprenant une multitude de définitions de code de fonction et de définitions de données ;
mélanger (402) les définitions de code de fonction et les définitions de données au sein d'un fichier de code source ou parmi le jeu de fichiers de code source de manière aléatoire en conservant la fonctionnalité des champs de code source ;
contrôler (404) un compilateur pour produire des fichiers objets à partir des fichiers de code source ;
agencer (406) les fichiers objets dans un ordre aléatoire pour un éditeur de liens ;
contrôler (408) l'éditeur de liens pour lier les fichiers objets produits en un fichier exécutable binaire ;
répéter (410) les étapes ci-dessus un nombre donné de fois et produire un nombre donné de fichiers exécutables binaires uniques ayant chacun une séquence unique de bits et la même fonctionnalité.
